# FASCICULE DE BREVET EUROPEEN

(11) **EP 1 763 100 B1**
(45) Date de publication et mention de la délivrance du brevet: **10.12.2008**
(21) Numéro de dépôt: 06354026.4
(22) Date de dépôt: 31.08.2006
(51) Int. Cl.: H01M 8/02

(54) **Micropile à combustible avec une membrane renforcée par un élément d'ancrage et procédé de fabrication d'une micropile à combustible**
Mikrobrennstoffzelle mit Verankerungselement verstärkte elektrolytische Membrane und Verfahren zu deren Herstellung
Microfuel cell with anchoring element reinforced electrolytic membrane and process for the manufacture thereof

(30) Priorité: 08.09.2005 FR 0509192
(43) Date de publication de la demande: 14.03.2007
(73) Titulaire: Commissariat à l'Energie Atomique, 75015 Paris (FR)
(72) Inventeur: Laurent, Jean-Yves, 38420 Domene (FR); Gaillard, Frédéric, 38500 Voiron (FR); Lambert, Karine, 38134 Saint Julien de Ratz (FR); Plissonnier, Marc, 38320 Eybens (FR)
(74) Mandataire: Jouvray, Marie-Andrée

(56) Documents cités:
- WO-A-20/05079466
- FR-A- 2 859 201
- US-A1- 2001 040 250

## Description

### Domaine technique de l'invention

L'invention concerne une micropile à combustible comportant au moins :
- un substrat muni de faces avant et arrière
- et un empilement successif d'une première électrode, d'une membrane électrolytique sensiblement plane et d'une seconde électrode, ledit empilement étant supporté par la face avant du substrat.

L'invention concerne également un procédé de fabrication d'une micropile à combustible.

### État de la technique

Dans le domaine des piles à combustible, il existe actuellement deux catégories de piles. La première catégorie concerne les piles dites en empilement de type filtre presse, telles que les piles à combustible à membrane échangeuse de protons (« PEMFC » ou Proton Exchange Membrane Fuel Cell »). Ces piles comportent généralement un grand nombre de cellules élémentaires disposées en série. Chaque cellule comporte un empilement comprenant une anode et une cathode, séparées par une membrane électrolytique. L'empilement, généralement appelé empilement de type « EME » (Electrode-Membrane-Electrode), est disposé entre deux plaques collectrices de courant. L'ensemble des cellules élémentaires forme un assemblage de type filtre-presse, avec des plaques de serrage boulonnées de part et d'autre d'une série d'empilements EME.

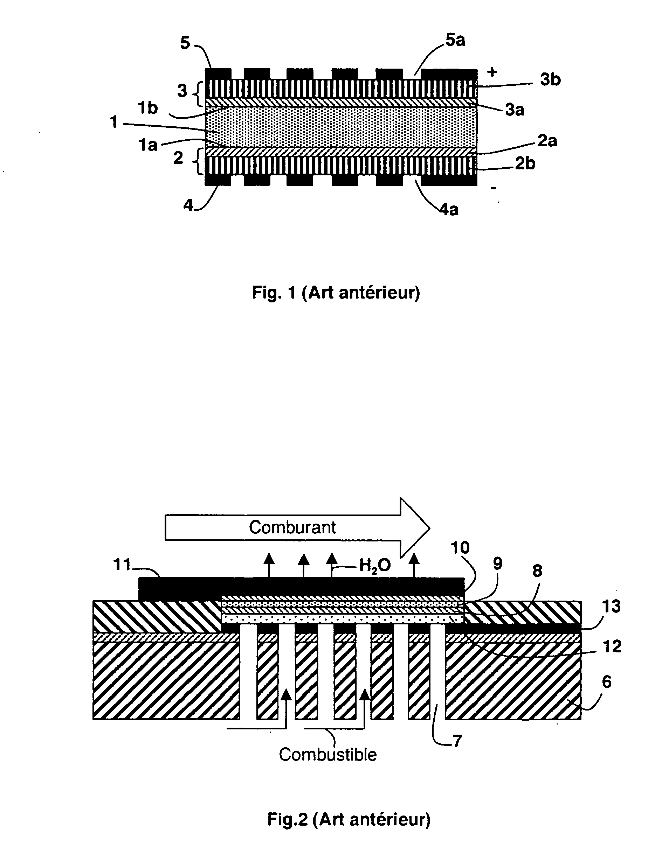

À titre d'exemple, comme illustré sur la figure 1, une pile à combustible comporte un empilement EME comprenant une membrane électrolytique 1 munie de faces avant et arrière 1 a et 1 b. Les faces avant et arrière 1 a et 1 b sont respectivement et successivement recouvertes par des première et seconde couches catalytiques 2a et 3a et des couches de diffusion 2b et 3b. La première couche catalytique 2a et la première couche de diffusion 2b forment l'anode 2 tandis que la seconde couche catalytique 3a et la seconde couche de diffusion 3b forment la cathode 3. Des premier et second collecteurs 4 et 5 sont respectivement disposés sur les faces externes des première et seconde couches de diffusion 2b et 3b. Ils sont intégrés à l'empilement EME, c'est-à-dire que l'empilement EME et les premier et second collecteurs de courant 4 et 5 forment une même cellule élémentaire. Ils sont chacun constitués par un dépôt métallique comportant une pluralité de passages transversaux 4a et 5a destinés à permettre le passage d'un fluide vers une couche de diffusion. Ainsi, l'hydrogène, servant généralement de combustible, peut passer à travers les passages transversaux 4a du collecteur de courant anodique 4 pour atteindre la couche de diffusion 2b de l'anode 2. L'oxygène servant généralement de comburant passe à travers les passages transversaux 5a du collecteur de courant cathodique 5 pour atteindre la couche de diffusion 3b de la cathode 3. De même, l'eau produite au cours du fonctionnement de la pile à combustible est évacuée par les mêmes passages transversaux 5a.

Avec cette première catégorie de piles à combustible, l'approvisionnement des électrodes en fluide réactif et l'évacuation des produits formés lors du fonctionnement de la pile peuvent représenter des difficultés principales, notamment dans le domaine des équipements portables. En effet, la miniaturisation des piles à combustible impose de réaliser les moyens de stockage et les circuits de circulation de fluide, dans des volumes restreints. Or, les piles à combustible en empilement de type filtre-presse sont limités en terme de miniaturisation.

Ainsi, depuis quelques années, certains proposent de réaliser des piles à combustible miniatures, au moyen de techniques issues de la microtechnologie et plus particulièrement par dépôt et structuration de couches minces sur un substrat. Cette seconde catégorie de piles à combustibles, également appelées micropiles à combustible de type planaire permet, de réduire, le volume des circuits d'approvisionnement et éventuellement de stockage des fluides réactifs et des produits formés. D'une manière générale, les circuits d'approvisionnement des électrodes sont, sous forme de cavités ou de micro-canaux d'approvisionnement formés dans le substrat, avec éventuellement des couches de diffusion micro-poreuses amenant les fluides aux électrodes ou à la membrane électrolytique. A titre d'exemple, la fabrication d'une micropile à combustible comportant une pluralité de micro-canaux d'approvisionnement formés dans un substrat en silicium ou en polydiméthylsiloxane (PDMS) est décrite dans l'article "Novel microfabrication approaches for directly patterning PEM fuel cell membranes", de K. Shah et al (Journal of Power Sources, 123 (2003), 172-181). L'anode, la membrane électrolytique et la cathode sont sous forme de couches minces, successivement déposées sur un substrat comportant des micro-canaux d'approvisionnement.

La figure 2 représente, à titre d'illustration, une micropile à combustible selon l'art antérieur, comportant un substrat 6 supportant une anode 8, une membrane électrolytique 9 et une cathode 10. Un collecteur de courant cathodique 11 est disposé sur la cathode 10 et la circulation du comburant est tangentielle à la cathode 10. L'approvisionnement en combustible de l'anode 8 est réalisé au moyen de canaux de circulation 7 formés verticalement dans le substrat 6. Les canaux de circulation 7 permettent donc de transporter le combustible depuis une source en combustible (non représentée) vers une couche de diffusion micro-poreuse 12 disposée entre l'anode 8 et un collecteur de courant 13.

Dans la demande de brevet WO-A-2005/079466, une micropile à combustible, intégrée dans un substrat, comporte une membrane électrolytique comportant des éléments en saillie qui délimitent, avec une des faces dudit substrat, des canaux d'alimentation.

Les micropiles à combustible, réalisées dans un substrat, avec des supports poreux et/ou des micro-canaux d'alimentation, ne sont, cependant, pas adaptées lorsqu'il existe une différence de pression de part et d'autre de la membrane électrolytique. En effet, cette différence de pression peut provoquer la destruction de la micropile ou un décollement d'une ou de plusieurs couches minces disposées sur le substrat. Cette différence de pression a, plus particulièrement, lieu dans des piles à combustibles miniaturisées, où les volumes sont réduits car le contrôle de la pression de combustible n'y est pas parfaitement maîtrisé.

La demande de brevet FR-A-2859201 décrit, dans un domaine différent, un dispositif microélectronique, tel qu'un capteur d'accélération, comportant un élément suspendu rattaché à un support par un pilier. La base dudit pilier est enterrée dans une cavité du support et elle comporte une zone de section élargie pour ancrer le pilier dans le support. De même, la demande US-A-2001/0040250 décrit un micro-composant électronique comportant des rainures d'ancrage servant à fixer une plaque déformable sur une plaque fixe.

### Objet de l'invention

L'invention a pour but une micropile à combustible remédiant aux inconvénients de l'art antérieur. Plus particulièrement, l'invention a pour but une micropile à combustible capable de fonctionner lorsqu'il existe une différence de pression de part et d'autre de l'empilement EME, sans risque de décollement ou de destruction.

Selon l'invention, ce but est atteint par les revendications annexées.

Plus particulièrement, ce but est atteint par le fait que la micropile à combustible comportant au moins :
- un substrat muni de faces avant et arrière
- un empilement successif d'une première électrode, d'une membrane électrolytique sensiblement plane et d'une seconde électrode, ledit empilement étant supporté par la face avant du substrat,
est caractérisée en ce que la membrane électrolytique comporte au moins un élément d'ancrage faisant saillie sensiblement perpendiculairement au plan de ladite membrane et disposé dans une partie complémentaire d'un évidement d'ancrage formé dans le substrat.

Plus particulièrement, le substrat comporte une pluralité de micro-canaux, sensiblement perpendiculaires au plan de la membrane et comportant chacun des première et seconde ouvertures, respectivement dans les faces avant et arrières du substrat.

Selon un premier développement de l'invention, l'évidement d'ancrage est un des micro-canaux, les autres micro-canaux étant destinés à l'approvisionnement en fluide réactif.

Selon un second développement de l'invention, l'évidement d'ancrage comporte au moins un passage étroit pour l'élément d'ancrage et débouchant sur une cavité élargie.

L'invention a également pour but un procédé de fabrication d'une micropile à combustible selon le premier développement de l'invention, facile à mettre en oeuvre et peu coûteux.

Selon l'invention, ce but est atteint par le fait qu'il comporte au moins les étapes successives suivantes :
- formation, dans le substrat, de la pluralité de micro-canaux,
- formation de la première électrode sur la face avant du substrat, entre les micro-canaux,
- sélection, parmi les micro-canaux, d'un micro-canal destiné à former l'évidement d'ancrage,
- dépôt d'un film mince photosensible permettant d'obturer la seconde ouverture des micro-canaux non sélectionnés,
- étalement, sur la face avant du substrat munie de la première électrode, d'une couche mince de solution électrolytique de manière à former, après séchage, la membrane électrolytique sensiblement plane, avec l'élément d'ancrage faisant saillie sensiblement perpendiculairement au plan de ladite membrane et remplissant au moins une partie complémentaire de l'évidement d'ancrage
- et formation de la seconde électrode sur la face libre sensiblement plane de la membrane électrolytique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, en coupe, un empilement élémentaire d'une pile à combustible de type filtre-presse, selon l'art antérieur.
La figure 2 représente, en coupe, une micropile à combustible de type planaire selon l'art antérieur.
La figure 3 représente, schématiquement et en coupe, un mode particulier de réalisation d'une micropile à combustible selon l'invention.
La figure 4 représente, schématiquement et en coupe, une variante de réalisation de la micropile à combustible selon la figure 3.

### Description de modes particuliers de réalisation

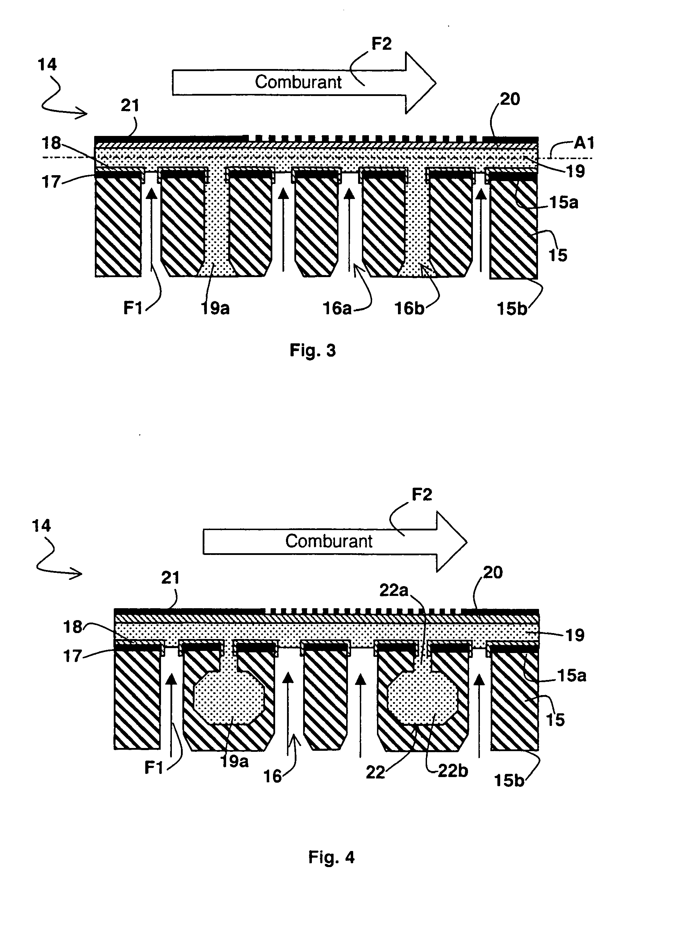

Selon des modes particuliers de réalisation représentés sur les figures 3 et 4, une micropile à combustible 14 comporte un substrat 15, muni de faces avant 15a et arrière 15b, de préférence sensiblement planes. Le substrat 15, par exemple en silicium, en plastique ou en céramique, comporte une pluralité de micro-canaux 16, sensiblement perpendiculaires au plan de la face avant 15a du substrat. Ainsi, six micro-canaux sont représentés sur la figure 3 et quatre micro-canaux 16 sont représentés sur la figure 4, avec chacun des première et seconde ouvertures, respectivement dans les faces avant 15a et arrière 15b du substrat 15. Le substrat 15 est, ainsi, traversé, dans son épaisseur, par les micro-canaux 16.

Dans le mode particulier de réalisation représenté sur la figure 3 et comme indiqué ci-après, les six micro-canaux sont constitués respectivement de quatre micro-canaux 16a destinés à l'approvisionnement en fluide et de deux micro-canaux 16b destinés à servir d'évidements d'ancrage. De plus, un premier collecteur de courant 17 est, de préférence, disposé sur la face avant 15a du substrat 15 et il est percé ou découpé de manière à comporter des ouvertures au niveau des micro-canaux16a et 16b. Le premier collecteur de courant 17 et la forme du substrat 15 permettent, notamment, d'assurer la continuité du passage du courant dans le premier collecteur de courant. À titre d'exemple, le premier collecteur de courant 17 peut être sous la forme d'une grille munies d'ouvertures respectivement disposées en regard des premières ouvertures des micro-canaux 16a et 16b.

Le premier collecteur de courant 17 est recouvert par une pluralité d'éléments catalytiques 18. Plus particulièrement, la totalité de la surface libre du premier collecteur de courant 17 est recouverte par lesdits éléments catalytiques 18 qui sont séparés les uns des autres par les micro-canaux 16a et 16b. Les éléments catalytiques constituent alors la première électrode de la micropile 14, par exemple une anode.

La face avant 15a du substrat 15, munie du premier collecteur de courant 17 et des éléments catalytiques 18, supporte successivement une membrane électrolytique 19 sensiblement plane, une seconde électrode 20 et un second collecteur 21. La seconde électrode 20 et le second collecteur de courant 21 sont, par exemple, sous forme de couches minces sensiblement planes. Le second collecteur de courant 21 peut être en partie discontinu.

Par membrane électrolytique sensiblement plane, on entend une couche mince dont les faces avant et arrière sont sensiblement planes. Par ailleurs, compte tenu de la faible épaisseur de la membrane électrolytique, un plan principal, parallèle aux plans respectifs des faces avant et arrière de la membrane électrolytique peut être défini. Ainsi, sur la figure 3, le plan principal de la membrane électrolytique 19 est représenté par une droite notée A1, en traits mixtes et il est parallèle au plan de la face avant 15a du substrat 15.

L'empilement successif formé par la première électrode 18, la membrane électrolytique 19 et la seconde électrode 20 est, par ailleurs, fixé mécaniquement au substrat 15. Cette fixation est assurée par au moins un élément d'ancrage 19a appartenant à la membrane électrolytique 19. Sur la figure 3, la membrane électrolytique 19 comporte, en effet, deux éléments d'ancrage 19a, faisant saillie sensiblement perpendiculairement au plan principal A1 de ladite membrane 19 et occupant chacun un micro-canal 16b. Chaque micro-canal 16b occupé par un élément d'ancrage 19a sert, alors, d'évidement d'ancrage pour ledit élément d'ancrage 19a. Un élément d'ancrage 19a est, alors disposé dans une partie complémentaire de l'évidement d'ancrage qui lui est associé.

Les quatre autres micro-canaux 16a sont utilisés pour approvisionner la micropile à combustible, et plus particulièrement la première électrode 18, en fluide réactif. Le fluide réactif est, par exemple, un combustible lorsque la première électrode 18 est une anode. La circulation d'un fluide réactif dans les micro-canaux 16a, non occupés par un élément d'ancrage 19a, est représentée sur la figure 3, par une flèche F1 allant de bas en haut, c'est-à-dire de la seconde ouverture d'un micro-canal 16a en direction de la première ouverture. Chacune des secondes ouvertures des micro-canaux 16a peut être connectée à une source en fluide réactif, tel qu'un réservoir de stockage. De plus, l'approvisionnement de la seconde électrode 20, en fluide réactif, par exemple un comburant, peut être réalisé par tout type de moyen. Cet approvisionnement est, par exemple, réalisé à l'aide d'un canal d'alimentation (non représenté) aménagé au-dessus de l'empilement et sensiblement parallèle au plan de la seconde électrode. L'approvisionnement de la seconde électrode 19 en comburant est représenté, sur la figure 3, par la flèche F2 sensiblement parallèle à la seconde électrode 20.

Les micro-canaux 16a et 16b peuvent être de dimensions variables. À titre d'exemple, ils ont un diamètre de l'ordre de 50 micromètres et la distance séparant deux micro-canaux adjacents est de 30 micromètres. Dans ce cas, 10% des micro-canaux sont, de préférence, utilisés comme évidement d'ancrage pour accueillir les éléments d'ancrage de la membrane électrolytique 19. De plus, la forme et la taille des micro-canaux 16a et 16b peuvent être adaptées de manière à permettre une meilleure fixation de la membrane électrolytique 19 au substrat 15. Ainsi, comme représenté sur la figure 3, les parois délimitant un micro-canal 16b peuvent former, en leur partie inférieure, une zone évasée débouchant sur la seconde ouverture dudit micro-canal 16b.

À titre d'exemple, la micropile à combustible représentée sur la figure 3 est obtenue en formant, préalablement, dans le substrat 15, la pluralité de micro-canaux 16a et 16b. Pour un substrat 15 en silicium, cette opération peut être réalisée par gravure ionique réactive ou RIE ("Reactive Ion Etching"), en réalisant des micro-canaux 16a et 16b de diamètre réduit, par exemple de l'ordre de 30 micromètres, avec une distance entre deux micro-canaux 16a et 16b, par exemple de l'ordre de 80 micromètres. Une gravure supplémentaire est, ensuite, réalisée pour réaliser la zone évasée de la partie inférieure de chaque micro-canal et donc faciliter l'ancrage des éléments d'ancrage 19a dans les micro-canaux 16b.

Ensuite, le premier collecteur de courant et la première électrode sont successivement formés sur la face avant 15a du substrat 15, entre les micro-canaux 16. Les éléments collecteurs de courant 17 sont, par exemple, formés par dépôt physique en phase vapeur (dépôt PVD) d'une couche mince en or. Les éléments catalytiques 18 de la première électrode sont, plus particulièrement, réalisés au moyen de nanotubes de carbone, formés sur les éléments collecteurs de courant 17 préalablement recouverts de promoteur de croissance et destinés à servir de support de catalyseur. Le catalyseur est, par exemple, déposé sur les nanotubes de carbone, par électrodéposition.

Parmi les micro-canaux 16a et 16b formés dans le substrat 15, un ou plusieurs micro-canaux 16b sont sélectionnés pour former un ou plusieurs évidements d'ancrage. Deux micro-canaux 16b ont, par exemple, été choisis pour la micropile représentée sur la figure 3. Un film mince photosensible est ensuite déposé sur la face arrière 15b du substrat 15, de manière à obturer la seconde ouverture des micro-canaux 16a non sélectionnés. Le film mince permet, ainsi, d'emprisonner un volume d'air dans les micro-canaux 16a non sélectionnés. Une solution électrolytique est ensuite étalée, par exemple, par dépôt par centrifugation ("spin coating"), sur la face avant 15a du substrat 15, recouverte du premier collecteur de courant et de la première électrode. La solution électrolytique remplit alors les micro-canaux 16b sélectionnés tandis que le volume d'air contenu dans les autres micro-canaux 16a empêche le remplissage desdits micro-canaux 16a par la solution électrolytique. La solution électrolytique, une fois séchée, permet de former, les deux éléments d'ancrage 19a et une couche mince sensiblement plane. Les deux éléments d'ancrage occupent les micro-canaux 16b sélectionnés et la couche mince est supportée par la face avant 15a du substrat 15, l'ensemble formant la membrane électrolytique 19 qui peut être une membrane ionomère à base de perfluorosulfonate, tel que le Nafion®.

La seconde électrode 20, par exemple en carbone platiné, est ensuite formée sur la face avant de la membrane électrolytique, par étalement par spray et le second collecteur de courant 21 peut, ensuite, être déposé sur la surface libre de la seconde électrode 20, par dépôt PVD.

Une telle micropile à combustible 14 est particulièrement adaptée pour fonctionner lorsqu'il existe une différence de pression de part et d'autre de l'empilement Electrode-Membrane-Electrode (EME). En effet, le ou les éléments d'ancrage de la membrane électrolytique assurent une fixation mécanique permettant d'éviter les problèmes de destruction de la micropile ou de décollement de l'empilement ou d'au moins un élément de cet empilement. De plus, cette fixation mécanique est facile à mettre en oeuvre et peu coûteuse. Elle ne nécessite pas l'introduction d'un matériau nouveau dans la micropile à combustible, puisque le matériau utilisé pour former le ou les éléments d'ancrage est constitué par la solution électrolytique destinée à former la membrane dans l'empilement. Enfin, le volume de la micropile à combustible n'est pas augmenté par ce mode de fixation et l'augmentation de la masse de la micropile est négligeable.

La réalisation d'une telle micropile présente également l'avantage de pouvoir ajuster ou contrôler le nombre d'évidements d'ancrage, en fonction de la différence de pression susceptible d'avoir lieu de part et d'autre de l'empilement. Il est également possible de contrôler le rapport entre la surface fixée par les éléments d'ancrage et la surface sous pression ainsi que la disposition des éléments d'ancrage. En effet, l'adhérence entre les différents éléments de la micropile à combustible étant dépendante des matériaux utilisés, il est possible de mesurer préalablement cette adhérence, de manière à estimer la force d'ancrage nécessaire et, ainsi, choisir le nombre, la forme et la disposition des éléments d'ancrage à former lors de la construction de la micropile.

Un micro-canal 16b utilisé pour recevoir un élément d'ancrage 19a de la membrane électrolytique 19 peut être remplacé par tout type d'évidement formé dans le substrat 15. Ainsi, dans la variante de réalisation représentée sur la figure 4, les deux micro-canaux 16b occupés par les éléments d'ancrage 19a, dans la micropile 14 selon la figure 3, sont remplacés par deux évidements fermés 22, formés dans le substrat 15. Chaque évidement 22 comporte, de préférence, un passage étroit 22a pour l'élément d'ancrage 19a correspondant et ce passage étroit 22a débouche sur une cavité élargie 22b fermée. Sur la figure 4, les deux éléments d'ancrage 19a de la membrane électrolytique 19 occupent la totalité du volume des évidements 22 correspondants. Le volume des évidements 22 peut n'être rempli que partiellement par les éléments d'ancrage 19a, ceux-ci ayant, cependant, une forme complémentaire à au moins une partie de l'évidement 22 de manière à assurer un ancrage satisfaisant de la membrane 19 au substrat 15.

Sur la figure 4, quatre micro-canaux 16 destinés à l'approvisionnement de la première électrode 18 en fluide réactif et, plus particulièrement en comburant, sont répartis dans le substrat 15, sensiblement perpendiculairement au plan de la membrane électrolytique 19. Ainsi, sur la figure 4, chaque évidement 22 est entouré par deux micro-canaux 16. Les éléments collecteurs de courant 17 formant le premier collecteur et supportant les éléments catalytiques 18 de la première électrode sont alors séparés les uns des autres par les micro-canaux 16 et les passages étroits 22a des deux évidements 22.

Une telle micropile à combustible est, par exemple, obtenue en formant, préalablement, dans le substrat 15, les quatre micro-canaux 16 et les deux évidements 22, par exemple par gravure RIE. Puis, le premier collecteur de courant 17 et la première électrode 18 sont successivement formés sur la face avant 15a du substrat 15. Ils peuvent être formés comme précédemment décrit. Ensuite, la solution électrolytique destinée à former la membrane électrolytique 19, avec ses éléments d'ancrage 19a est étalée sur la face avant 15a du substrat 15, recouverte du premier collecteur de courant et de la première électrode. La solution électrolytique remplit, alors, les micro-canaux 16 et les évidements 22. Les micro-canaux 16 sont ensuite libérés par soufflage, à partir de la face arrière 15b du substrat. Après séchage de la solution électrolytique, les autres éléments de la micropile à combustible, tels que la seconde électrode 20 et le second collecteur de courant, sont ensuite formés tel que précédemment décrit.

Dans d'autres modes de réalisation, l'approvisionnement en fluide réactif pourrait être réalisé par tout autre type de moyens, les micro-canaux servant à l'approvisionnement en comburant pouvant être, par exemple, remplacés par un substrat poreux, muni d'au moins un évidement d'ancrage.

## Revendications

1. Micropile à combustible (14) comportant au moins :
- un substrat (15) muni de faces avant (15a) et arrière (15b)
- et un empilement successif d'une première électrode, d'une membrane électrolytique (19) sensiblement plane et d'une seconde électrode (20), ledit empilement étant supporté par la face avant (15a) du substrat (15),
micropile (14) **caractérisée en ce que** la membrane électrolytique (19) comporte au moins un élément d'ancrage (19a) faisant saillie sensiblement perpendiculairement au plan de ladite membrane (19) et disposé dans une partie complémentaire d'un évidement d'ancrage (16b, 22) formé dans le substrat (15).

2. Micropile à combustible (14) selon la revendication 1, **caractérisée en ce que** l'élément d'ancrage (19a) occupe la totalité du volume de l'évidement d'ancrage (16b, 22).

3. Micropile (14) selon l'une des revendications 1 et 2, **caractérisée en ce que** le substrat (15) comporte une pluralité de micro-canaux (16, 16a, 16b), sensiblement perpendiculaires au plan de la membrane (19) et comportant chacun des première et seconde ouvertures, respectivement dans les faces avant et arrières (15a, 15b) du substrat (15).

4. Micropile (14) selon la revendication 3, **caractérisée en ce que** la première électrode est constituée d'une pluralité d'éléments catalytiques (18) distincts, séparés par les micro-canaux (16a, 16b) et disposés sur la face avant (15a) du substrat (15).

5. Micropile (14) selon la revendication 4, **caractérisée en ce qu'**elle comporte des premier et second collecteurs de courant (17, 21), respectivement disposés entre les éléments catalytiques (18) de la première électrode et la face avant (15a) du substrat (15) et sur la surface libre de la seconde électrode (20).

6. Micropile (14) selon l'une quelconque des revendications 3 à 5, **caractérisée en ce que** l'évidement d'ancrage est un des micro-canaux (16b), les autres micro-canaux (16a) étant destinés à l'approvisionnement en fluide réactif.

7. Micropile (14) selon l'une quelconque des revendications 1 à 5, **caractérisée en ce que** l'évidement d'ancrage (22) comporte au moins un passage étroit (22a) pour l'élément d'ancrage (19a) et débouchant sur une cavité (22b) élargie.

8. Micropile (14) selon l'une quelconque des revendications 1 et 2, **caractérisée en ce que** le substrat (15) est un substrat poreux, comportant au moins un évidement d'ancrage (16b, 22).

9. Procédé de fabrication d'une micropile à combustible (14) selon la revendication 6, **caractérisé en ce qu'**il comporte au moins les étapes successives suivantes :
- formation, dans le substrat (15), de la pluralité de micro-canaux (16a, 16b),
- formation de la première électrode sur la face avant (15a) du substrat (15), entre les micro-canaux (16a, 16b),
- sélection, parmi les micro-canaux (16a, 16b), d'un micro-canal (16b) destiné à former l'évidement d'ancrage,
- dépôt d'un film mince photosensible permettant d'obturer la seconde ouverture des micro-canaux (16a) non sélectionnés.
- étalement, sur la face avant (15a) du substrat (15) munie de la première électrode (18), d'une couche mince de solution électrolytique de manière à former, après séchage, la membrane électrolytique (19) sensiblement plane, avec l'élément d'ancrage (19a) faisant saillie sensiblement perpendiculairement au plan de ladite membrane (19) et remplissant au moins une partie complémentaire de l'évidement d'ancrage (16b)
- et formation de la seconde électrode (20) sur la face libre sensiblement plane de la membrane électrolytique (19).

## Claims

1. Micro fuel cell (14) comprising at least:
- a substrate (15) provided with a front face (15a) and a rear face (15b)
- and a successive stacking of a first electrode, a substantially flat electrolytic membrane (19) and a second electrode (20), said stacking being supported by the front face (15a) of the substrate (15),
micro fuel cell (14) **characterized in that** the electrolytic membrane (19) comprises at least one anchoring element (19a) salient substantially perpendicularly to the plane of said membrane (19) and arranged in a complementary part of an anchoring recess (16b, 22) formed in the substrate (15).

2. Micro fuel cell (14) according to claim 1, **characterized in that** the anchoring element (19a) occupies the whole of the volume of the anchoring recess (16b, 22).

3. Micro fuel cell (14) according to one of claims 1 and 2, **characterized in that** the substrate (15) comprises a plurality of microchannels (16, 16a, 16b), substantially perpendicular to the plane of the membrane (19) and each comprising first and second openings, respectively in the front and rear faces (15a, 15b) of the substrate (15).

4. Micro fuel cell (14) according to claim 3, **characterized in that** the first electrode is formed by a plurality of distinct catalytic elements (18) separated by the microchannels (16a, 16b) and arranged on the front face (15a) of the substrate (15).

5. Micro fuel cell (14) according to claim 4, **characterized in that** it comprises first and second current collectors (17, 21), respectively arranged between the catalytic elements (18) of the first electrode and the front face (15a) of the substrate (15) and on the free surface of the second electrode (20).

6. Micro fuel cell (14) according to any one of claims 3 to 5, **characterized in that** the anchoring recess is one of the microchannels (16b), the other microchannels (16a) being designed to perform supply of reactive fluid.

7. Micro fuel cell (14) according to any one of claims 1 to 5, **characterized in that** the anchoring recess (22) comprises at least one narrow passage (22a) for the anchoring element (19a) opening out onto a broader cavity (22b).

8. Micro fuel cell (14) according to any one of claims 1 and 2, **characterized in that** the substrate (15) is a porous substrate comprising at least one anchoring recess (16b, 22).

9. Method for production of a micro fuel cell (14) according to claim 6, **characterized in that** it comprises at least the following successive steps:
- formation of the plurality of microchannels (16a, 16b) in the substrate (15),
- formation of the first electrode on the front face (15a) of the substrate (15), between the microchannels (16a, 16b),
- selection, among the microchannels (16a, 16b), of a microchannel (16b) designed to form the anchoring recess,
- deposition of a photosensitive thin film enabling the second opening of the non-selected microchannels (16a) to be sealed off,
- spreading, on the front face (15a) of the substrate (15) equipped with the first electrode (18), of a thin layer of electrolytic solution so as to form the substantially flat electrolytic membrane (19), after drying, with the anchoring element (19a) salient substantially perpendicularly to the plane of said membrane (19) and filling at least a complementary part of the anchoring recess (16b),
- and formation of the second electrode (20) on the substantially flat free face of the electrolytic membrane (19).

## Patentansprüche

1. Mikrobrennstoffzelle (14), die mindestens umfasst:
- ein Substrat (15), mit einer Vorderseite (15a) und einer Rückseite (15b),
- sowie eine Aufschichtung von nacheinander einer ersten Elektrode, einer im Wesentlichen ebenen elektrolytischen Membran (19) und einer zweiten Elektrode (20), wobei die Aufschichtung von der Vorderseite (15a) des Substrats (15) getragen wird,
Mikrobrennstoffzelle (14), **dadurch gekennzeichnet, dass** die elektrolytische Membran (19) mindestens ein Verankerungselement (19a) umfasst, das im Wesentlichen quer zur Ebene der Membran (19) heraussteht und in einem komplementären Bereich von einer in dem Substrat (15) gebildeten Verankerungsaussparung (16b, 22) angeordnet ist.

2. Mikrobrennstoffzelle (14) nach Anspruch 1, **dadurch gekennzeichnet, dass** das Verankerungselement (19a) den gesamten Raum der Verankerungsaussparung (16b, 22) einnimmt.

3. Mikrobrennstoffzelle (14) nach einem der Ansprüche 1 und 2, **dadurch gekennzeichnet, dass** das Substrat (15) mehrere Mikrokanäle (16, 16a, 16b) umfasst, die im Wesentlichen quer zur Ebene der Membran (19) angeordnet sind und jeweils eine erste und eine zweite Öffnung in der Vorder- bzw. Rückseite (15a, 15b) des Substrats (15) umfassen.

4. Mikrobrennstoffzelle (14) nach Anspruch 3, **dadurch gekennzeichnet, dass** die erste Elektrode von einer Mehrzahl unterschiedlicher katalytischer Elemente (18) gebildet wird, die von den Mikrokanälen (16a, 16b) getrennt sind und auf der Vorderseite (15a) des Substrats (15) angeordnet sind.

5. Mikrobrennstoffzelle (14) nach Anspruch 4, **dadurch gekennzeichnet, dass** sie einen ersten und einen zweiten Stromkollektor (17, 21) umfasst, die jeweils zwischen den katalytischen Elementen (18) der ersten Elektrode und der Vorderseite (15a) des Substrats (15) und auf der freien Fläche der zweiten Elektrode (20) angeordnet sind.

6. Mikrobrennstoffzelle (14) nach einem der Ansprüche 3 bis 5, **dadurch gekennzeichnet, dass** die Verankerungsaussparung von einem der Mikrokanäle (16b) gebildet wird und die anderen Mikrokanäle (16a) zur Versorgung mit Reaktionsfluid vorgesehen sind.

7. Mikrobrennstoffzelle (14) nach einem der Ansprüche 1 bis 5, **dadurch gekennzeichnet, dass** die Verankerungsaussparung (22) mindestens eine schmale Durchführung (22a) für das Verankerungselement (19a) aufweist, die in einen erweiterten Hohlraum (22b) mündet.

8. Mikrobrennstoffzelle (14) nach einem der Ansprüche 1 und 2, **dadurch gekennzeichnet, dass** das Substrat (15) ein poröses Substrat ist, das mindestens eine Verankerungsaussparung (16b, 22) umfasst.

9. Herstellungsverfahren für eine Mikrobrennstoffzelle (14) nach Anspruch 6, **dadurch gekennzeichnet, dass** es mindestens folgende aufeinanderfolgende Schritte umfasst:
- Ausbildung der Mehrzahl von Mikrokanälen (16a, 16b) in dem Substrat (15),
- Herstellung der ersten Elektrode auf der Vorderseite (15a) des Substrats (15) zwischen den Mikrokanälen (16a, 16b),
- Wahl eines Mikrokanals (16b) aus den Mikrokanälen (16a, 16b), der dazu bestimmt ist, die Verankerungsaussparung zu bilden,
- Aufbringen einer dünnen, lichtempfindlichen Schicht zum Verschließen der zweiten Öffnung der nicht ausgewählten Mikrokanäle (16a),
- Ausbreitung einer dünnen Schicht elektrolytischer Lösung auf die mit der ersten Elektrode (18) versehene Vorderseite (15a) des Substrats (15), um nach dem Trocknen die im Wesentlichen ebene elektrolytische Membran (19) auszubilden, wobei das Verankerungselement (19a) im Wesentlichen quer zur Ebene der Membran (19) heraussteht und mindestens einen (16b) komplementären Bereich der Verankerungsaussparung ausfüllt,
- und Ausbildung der zweiten Elektrode (20) auf der im Wesentlichen ebenen, freien Fläche der elektrolytischen Membran (19).
